# EUROPEAN PATENT APPLICATION

(11) **EP 2 256 615 A1**
(43) Date of publication of application: **01.12.2010**
(21) Application number: 09305501.0
(22) Date of filing: 29.05.2009
(51) Int. Cl.: G06F 3/06

(54) **Self-defragmenting storage device**

(71) Applicant: Thomson Licensing, 92130 Issy-les-Moulineaux (FR)
(72) Inventor: Maas, Johann, 30853 Langenhagen (DE); Kochale, Axel, 31832 Springe (DE); Blawat, Meinolf, 30659 Hannover (DE)
(74) Representative: Rittner, Karsten

(57) **Abstract**

A storage device (EXS) is claimed, said storage device comprising a non-volatile storage device (DSK, FM) storing files according to a file system, communication means (PU2) for communicating, to the storage device, requests for copies of files stored in the storage device as well as for communicating the requested copies to a file requesting device, a buffer memory (RAM) for temporally storing at least one of: defragmenter code, file system data and file system metadata, a controller (PU2) adapted for operation in an input-output mode in which the controller is adapted for controlling retrieval and communication of requested copies according the requests. According to the invention, the controller (PU2) is further adapted for operation in an defragmentation mode in which the controller (PU2) is using one or both of the defragmenter code and the file system libraries stored in the buffer (RAM) for defragmenting one or more files stored in the storage medium.

## Description

### Technical Field

The invention is made in the technical field of storage devices.

### Background

Permanent or non-volatile mass storage media serve for storing of program code and other vital user data over longer periods of time. Due to the technical characteristics of such storage devices are random accessible. They usually consist of one or more hard disk drives (HDD) and/or flash-based solid state disk drives (SSD). Both medium types, HDDs and SSDs, represent block based storage devices that have to be accessed in units of sectors (for instance 512 bytes). Moreover, both medium types implement a standardized interface (e.g. parallel or serial ATA wherein ATA stands for advanced technology attachment), which enables the medium to be connected to a system bus of a computer device.

User level applications, executed by a central processing unit (CPU) of a hosting system such as a computer, however, typically do not access the mass storage in units of sectors. Instead, such applications operate with directories and files that provide an abstraction layer to data organization on storage. This kind of data organization is more convenient to be dealt with by users. The mentioned abstraction layer is provided by a file system manager (FS manager) that typically is part of an operating system of the hosting system but may be implemented as a standalone module on the hosting system, as well. The FS manager is the instance that maps the contents of files and directories to sectors on a particular storage device and that manages the communication with the mass storage media.

If the underlying mass storage medium is a sectored storage medium like a hard disk, the mapping of logical to physical sectors on storage device is typically linear and therefore predictable for FS Manager. In case of a non-sectored storage medium, like a solid state disc, mapping from logical sectors on physical sectors is done by a controller of the storage device using a translation layer. In this second case, the FS Manager has no knowledge about the physical location of data on storage.

The file system manager is often supported by a defragmenter program. The defragmenter program is responsible for sorting files and directories on storage media into an appropriate order such that input/output operations (I/O-operations) are optimized in terms of access time minimization and/or storage capacity is increased. It thus changes the mapping of files to sectors. The defragmenter is read into a volatile main memory from storage and run by the CPU when files on one of the maintained partitions get overly fragmented, i.e. scattered over many sectors of the storage media.

Prior art defragmenting is adapted for defragmenting all files in a partition of the storage medium when being run. This operation mode tends to require the whole available storage bandwidth for a reasonable amount of time and thus impedes users from working with the system, the storage medium or, at least, the partition for said amount of time.

In order to avoid users being hindered from work suddenly, prior art defragmenter programs are not run automatically and regularly when required for improving I/O-performance, but only on user request. Commonly, at the time a user is becoming aware that a defragmentation is necessary, he will not run the defragmenter since he is using the system, currently. After termination of use of the system the user may forget to initiate defragmentation. So in turn, the time required for defragmentation increases even more while the user is working with a system showing sub-optimal I/O-performance.

### Invention

The invention addresses the problem of making defragmentation more user convenient by removing the burden to decide whether-or-not to run the defragmenter as well as the use restrictions imposed during prior art defragmentation. It also resolves the problem that priorart file system defragmenters (executed externally to disk drive) cannot determine the physical location of file data on solid state based storage devices and therefore fail to effect any improvement of I/O performance on this type of storage. The invention proposes step-wise, file-level defragmentation performed directly in storage device.

Additionally, the introduced principles eliminate the barrier that hindered intelligent read-ahead techniques to be implemented directly on storage devices.

That is, the invention proposes a storage device comprising the features of claim 1.

Said storage device comprises a non-volatile storage medium storing files according to a file system, communication means for communicating, to the storage device, requests for copies of files stored in the storage device as well as for communicating the requested copies to a file requesting device, a buffer memory for temporally storing at least one of: defragmenter code, file system data and file system metadata, a controller adapted for operation in an input-output mode in which the controller is adapted for controlling retrieval and communication of requested copies according the requests. The controller is further adapted for operation in an defragmentation mode in which the controller is using one or both of the defragmenter code and the file system libraries stored in the buffer for defragmenting one or more files stored in the storage medium.

The features of further advantageous embodiments are specified in the dependent claims.

For instance, in an embodiment the controller is further adapted for switching from defragmentation mode to input-output mode upon communication of a request for a file copy wherein said switching is postponed until defragmentation of a files currently under defragmentation is terminated.

In a further embodiment the controller is further adapted for switching from input-output mode to defragmentation mode after detecting that the controller was idle in input-output mode for a predetermined period of time.

Requests for copies may be based on logical addresses. Then, retrieval of requested copies is controlled by the controller using a translation layer which maps physical addresses onto the logical addresses. That is, for storage devices that make use of a translation layer, e.g. solid state discs, the controller may be further adapted for updating the translation layer in accordance with the defragmentation.

For storage decive controller mainly performing a linear mapping from logical to physical sectors, there is another embodiment comprising that the communication means are further adapted for communicating indications from the file requesting device to the storage device said indications indicating whether a file system manager of the file requesting device is in active mode, in which the file system manager communicates requests for file copies using logical addresses of the files, the controller is further adapted for using communicated indications for harmonizing switching between input-output mode and defragmentation mode with the mode of the file system manager such that the controller switches to defragmentation mode, only, if the file system manager is not in active mode, and the controller switches to input-output mode, if the file system manager becomes active again, the controller further providing, via said communication means, update information regarding updates of logical file addresses which result from defragmentation.

The invention is further related to a hosting system for hosting a storage device according said another embodiment, said hosting system comprises a buffer memory for storing copies of file system data allowing for determining logical file addresses, a controller adapted for operation of a file system manager in an active mode in which the file system manager receives file requests and uses the file system copies in buffer memory for determining logical addresses corresponding to requested files, communication means for communication with said storage device, said communication means being adapted for sending determined logical addresses of files, for communicating copies of corresponding files, for communicating update information regarding any updates of logical file addresses and for sending an indication whether the file system manager is in active mode wherein, if the file system manager receives a file request while not being in active mode, the file system manager enters the active mode and sends a corresponding indication, and receives update information and updates the file system copies in the buffer memory, accordingly, before the file system manager determines the logical address corresponding to the file request.

In an embodiment of said hosting system, said communication means comprise a predetermined storage area of the storage device in which the controller stores the update information, said predetermined storage area being accessible by said file system manager of the hosting system for reading said update information and for storing said indication.

The integration of file system defragmenter task into storage device has several advantages: First, the defragmenter may be adapted to implement the file sorting algorithms in awareness of the storage type characteristics, implementation specific details and the disks internal geometry, for instance in the case of HDD, or architecture, for instance in case of an SSD. Second, the defragmenter activities save energy and bandwidth resources by not burdening the computer CPU, main memory and system busses with moving vast amounts of data across the system - the main reason for low acceptance of defragmenters. When run regularly and in idle mode by storage device, the defragmenter usually will require just a few seconds to complete and will not affect the systems overall performance at all. One more serious advantage that results from having a copy of file system libraries directly on storage device is a more intelligent read-ahead feature. With other words, if the controller on storage device knows where the contents of a currently accessed file are stored, it can read the data blocks that will probably be transferred next into buffer in advance, i.e. even before the request has arrived. This exploits the fact that files are typically read sequentially.

### Drawings

Exemplary embodiments of the invention are illustrated in the drawings and are explained in more detail in the following description. The exemplary embodiments depicted and described are explained only for elucidating the invention, but not for limiting the invention's scope and spirit which are solely defined in the claims.

In the figures:
Fig. 1 depicts an exemplary system comprising an exemplary embodiment of the inventive storage device
Fig. 2 depicts an exemplary flow chart of file system management in a hosting system hosting a storage device which does not make use of a mapping table
Fig. 3 depicts an exemplary flow chart of file defragmentation inside a storage device which does not make use of a mapping table
Fig. 4 depicts an exemplary mapping table based storage device prior to defragmentation
Fig. 5 depicts the exemplary mapping table based storage device of figure 4 after defragmentation and
Fig. 6 depicts an exemplary flow chart of file defragmentation inside a mapping table based storage device.

### Exemplary embodiments

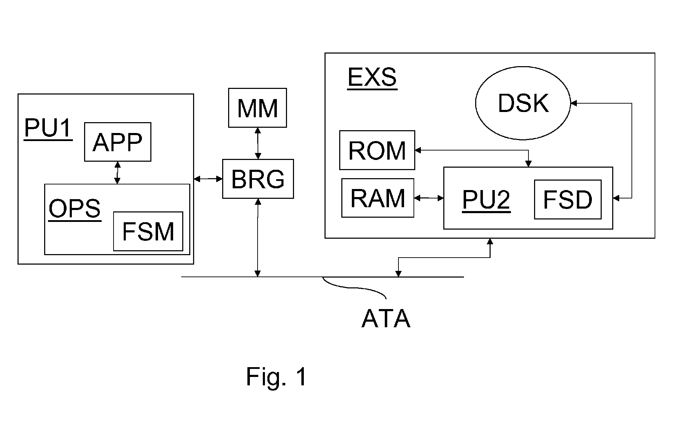

The hardware of the exemplary electronic device depicted in Fig. 1 comprises at least a processing unit PU1, a volatile main memory MM and one or more communication chips BRG on a main board, also referred to as the "bridge". The bridge BRG is connected to the processor PU1 and main memory MM via internal system busses and to a peripheral permanent storage system via an external bus ATA, such as parallel or serial ATA, for instance. The electronic device may further comprise other hardware components not depicted and mentioned since being irrelevant for achieving the inventive effect. Software components of the exemplary electronic device depicted in Fig. 1 comprise an operating system OPS and one or more file system managers FSM wherein there may be one for each type of file system found on storage device partitions. Software components further comprise file system libraries and other applications APP, such as a word processing program. When needed, said other applications APP are typically read into main memory via the external bus ATA from permanent storage EXS and then run by the processing unit PU1. The external storage EXS is, for instance, a hard disk drive HDD or a solid state disk SSD, onto which data is stored and from which data is read under control of a further processing unit PU2, also called a disk controller in case the storage medium is a disk based storage medium.

In order to incorporate defragmenter functionality into the external storage EXS, the storage device controller PU2 has to execute a defragmenter task. This task does not lower the device's performance as it's only activated when the disk is not accessed from outside (i.e. pausing). The defragmenter code and file system libraries that it relies upon need to be stored either in the storage device's read only memory ROM or in data blocks on storage medium itself, for instance along with the other code executed by the controller. Prior to starting the defragmenter FSD, it's program code and libraries have to be read into the device's internal random access memory RAM. As data structures, file organization and defragmentation strategies vary for different file system types, the overall defragmenter program may consist of a number of sub programs and libraries - the actual defragmenter modules, one for each supported file system type. Therefore, supporting several file system types (e.g. 3-5 mainstream file systems) may result in increased demand of internal memory for both, ROM and RAM.

Moving the defragmenter task FSD into storage device is not without complications. The most difficult problem to solve is the synchronization between file system manager FSM and defragmenter program FSD. The background is that most file system managers FSM maintain a copy of parts of file system data and metadata in main memory MM in more or less large buffers. Keeping a copy of data in main memory MM is of advantage because serving I/O requests to applications is much faster when the required data can be read or stored temporarily directly in RAM and doesn't need to be transferred the long way from or to storage EXS. This implies that changes to file system data and metadata are also not synchronized to storage EXS directly but are rather delayed in main memory MM for a certain period of time (mostly in the scale of a few seconds). Thus, the contents of data blocks on storage EXS may differ from their counterparts in main memory MM without the storage device EXS having any reliable way to detect which blocks differ. The differences are a problem for the defragmenter FSD which should not relocate file data and modify file system metadata that are potentially not up to date.

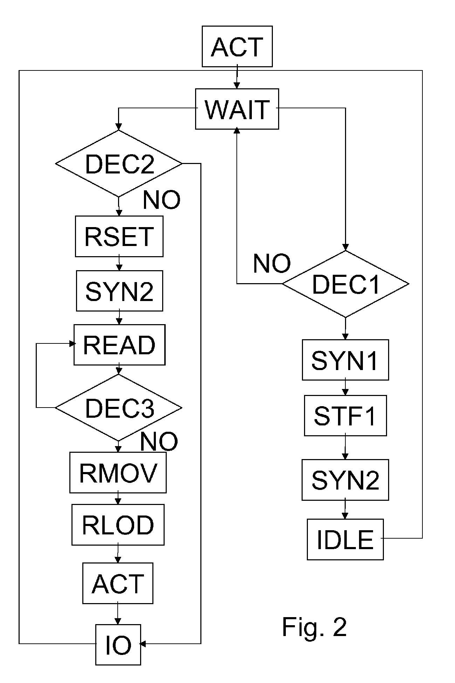

Therefore, it's proposed to extend the functionality of existing file system mangers FSM by an algorithm that enables the storage device EXS to receive feedback about the current file system status from file system manager FSM. The feedback may be communicated either by using additional wires, by introducing new bus commands, or by storing the status in a data block on permanent storage EXS. The method described in the invention bases on storing the file system status in a data block on permanent storage EXS. The data block location must be detectable and accessible by both, the file system manager FSM executed by computer PU1 and defragmenter task FSD running on disk controller PU2. An appropriate location, for instance, is the file system's super block. The super block structure is common, though different, for most of existing file systems. It's used to store vital data about the on-disk layout and location of important file system structures. For the purpose of supporting defragmentation directly on disk, the respective file system's super block must be extended by at least three flag variables. A first flag FS_IDLE is indicating whether file system manager FSM is working on the external storage EXS or not. A second flag DEFRAG_ACT is indication whether the external storage device EXS is currently defragmenting stored files. And a third flag NEED_DEFRAG is indicating whether the file system needs defragmentation. An exemplary embodiment of a file system manager algorithm making use of said flag variables is shown in Figure 2.

In the beginning, the file system manager FSM is activated in step ACT. Then, a waiting state is entered in step WAIT and maintained until an event occurs. Such event may be an I/O request requesting a certain file to-be-retrieved or to-be-stored or a time-out signal indicating the file system manager FSM being idle for some predetermined time period, e.g. ten minutes.

In case the waiting state was left due to time-out signal, a check is made in decision step DEC1 whether file system data has been modified in the meantime. If not, the waiting state WAIT is entered again. Otherwise, file system data and file system metadata is synchronized with the storage EXS in step SYN1 before NEED_DEFRAG flag and FS_IDLE flag are set in file system's super block in step STF1. After setting these flags the file system manager FSM writes file system's super block to storage EXS, before it is set to an idle state. Then, processing returns to waiting state by re-entering step WAIT.

In case an I/O-request is received the file system manager FSM checks in decision step DEC2 whether it is in idle state. If not, i.e. if file system manager FSM is still active, the method passes on to step IO in which the requested I/O-operation is performed. Then, the method returns to step WAIT.

If at the time, at which an I/O request arrives, the file system manager FSM is in idle state, in step RSET the file system manager FSM resets flag FS_IDLE in file system's super block before synchronizing the file system's super block to storage in step SYN2. Then, file system manager FSM reads in step READ the current status of flag DEFRAG_ACT in file system's super block and decides in decision step DEC3 whether flag DEFRAG_ACT is set. If so, file system manager FSM returns to step READ.

Otherwise, file system data and/or file system metadata buffered in main memory MM is updated by first discarding or invalidating what was kept in main memory MM in step RMOV and then reloading said file system information from file system on storage EXS in step RLOAD. Then, the file system manager FSM is set to active state in step ACT and the requested I/O-operation is performed in step IO.

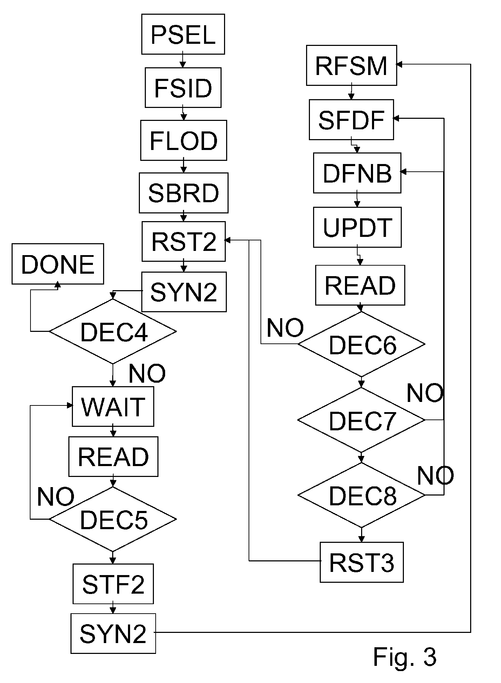

The exemplary defragmenter task FSD running on disk controller PU2 also has to implement some functions (additionally to the actual defragmenter code) allowing it to interact with the file system manager FSM. The exemplary flow diagram of these functions is illustrated in Figure 3. The defragmenter task FSD accesses the three flag variables in file system's super block for communicating status information of file system on storage to FS manager.

Prior to starting the file sorting procedure, the defragmenter FSD on disk drive EXS must select a partition in step PSEL, identify the type of file system on targeted partition in step FSID and, in step FLOD, read appropriate defragmenter algorithms and file system libraries into buffer memory RAM. Then in step SBRD, the defragmenter FSD reads file system's super block from storage. DEFRAG_ACT flag is reset in subsequent step RST2 prior to synchronizing the file system's super block to storage in step SYN2.

After synchronization, it is checked in decision step DEC4 whether NEED_DEFRAG flag is set.

If so, defragmenter task FSD goes into a loop where it periodically checks if the file system manager on computer CPU has released the file system on corresponding partition by evaluating the FS_IDLE flag in file system's super block in step WAIT, in which the defragmenter FSD is halted for time, e.g. three seconds, step READ, in which FS_IDLE flag is read, and decision step DEC5 which checks whether FS_IDLE flag is set.

After leaving the loop due to detection that FS_IDLE flag is set, the defragmenter FSD marks the partition to be defragmented as being busy by setting the DEFRAG_ACTIVE flag in file system's super block in step STF2. Then, file system's super block and storage EXS are synchronized in step SYN2 and file system metadata is read in step RFSM.

In subsequent step SFDF a file is selected for defragmentation and some blocks of the selected file are defragmented in step DFNB. The corresponding file system metadata is updated on storage in step UPDT and FS_IDLE flag is read in step READ.

Decision step DEC6 checks whether FS_IDLE flag is still set. If so, the disk fragmenter FSD checks whether the file is completely defragmented in decision step DEC7 and returns to step DFNB if not. Otherwise, it is decided in decision step DEC8 whether all files of the partition are already defragmented. If not, the method returns to step SFDF. Otherwise, NEED_DEFRAG flag is reset in file system's super block and the method returns to step RST2.

The defragmenter FSD may be restricted from being run too frequently. For instance, it may be restricted to being run only once a day or once a week, for instance.

The synchronization methods described above are well suited for storage devices which do not utilize internal mapping tables mapping logical sector addresses onto physical ones. Introducing such mapping tables which are known for SSD, for EXS allows for omitting said synchronization as exemplarily explained in detail below.

That is the invention also proposes an encapsulated file-level defragmentation inside mapping table based storage devices, such as SSD or accordingly modified EXS.

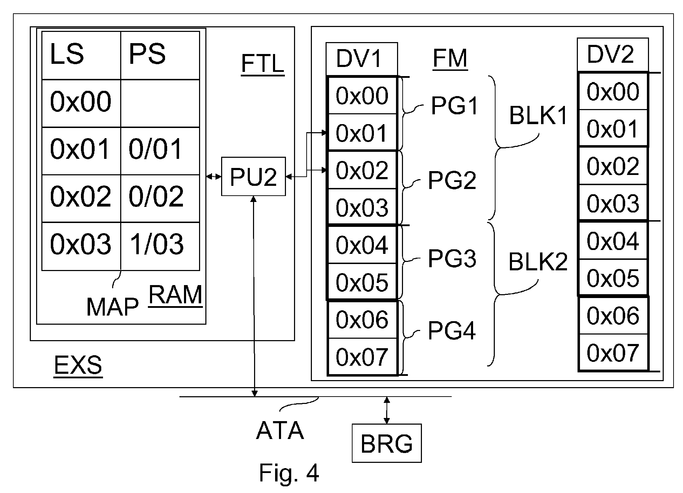

Conventional file-level storage defragmentation techniques rely on analyzing file system metadata (e.g. file allocation structures), copying file blocks to more appropriate places on storage, and manipulating the file system metadata to reflect the changes. However, when performing file-level defragmentation inside the exemplary storage device shown in Figure 4 which depicts a flash based memory FM and a flash translation layer FTL prior to defragmentation. The flash translation layer FTL consists of the controller PU2 and a mapping table MAP which maps logical sector addresses onto physical sector addresses.

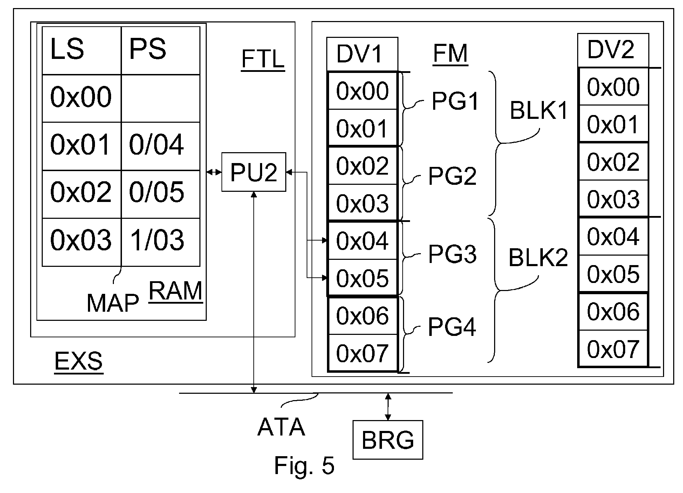

In this framework, the step of manipulating file system metadata can be replaced by re-linking the entries in the mapping table MAP. Indeed, the defragmentation effect remains the same when the location of moved blocks is changed only in the mapping table. This means that the defragmenter task copies the contents of files to places where contiguous file blocks can be accessed with minimal I/O cycles but does not need to update the file allocation structures in file system metadata. Instead, the changed block locations are entered into the internal mapping table MAP, such that only the physical location of blocks changes, not the logical. The working principle is explained in more detail in conjunction with Figure 5, which depicts the flash based memory FM and the flash translation layer FTL after defragmentation.

Assuming that the logical sectors 0x01, 0x02 and 0x03 in Figure 4 store consecutive data sectors of the same file, reading this portion of the file would require at least two interleaving cycles to be performed by Controller PU2. The reason for doing two cycles is that Flash memory chips DV1, DV2 are accessed in units of pages PG1, PG2, PG3, PG4. Each of the pages comprises two sectors. E.g. page PG1 comprises the sectors 0x00 and 0x01 and page PG2 comprises the sectors 0x02 and 0x03. Pages are referenced for flash device DV1 only but exist on DV2, too. In each interleaving cycle, from each of the devices exactly one page can be read. When erasing data, only entire blocks, each comprising a constant number of pages (e.g. BLK1 comprises two pages PG1 and PG2) can be erased.

As logical sectors 0x01 and 0x02 are mapped to different pages PG1 and PG2 on the same memory chip, two interleaving cycles are needed for reading the data of logical sectors 0x01 and Ox02. But, theoretically, one interleaving cycle would be sufficient if both logical sectors, 0x01 and 0x02, were mapped to a single page of Device DV1.

Figure 5 shows the exemplary storage after defragmentation. Now logical sectors 0x01 and 0x02 are mapped on physical sectors 0x04 and 0x05 of storage module DV1. As physical sectors 0x04 and 0x05 are now on a same page PG3 they can be read in a single cycle. As can be seen from the mapping table MAP, only the physical sector addresses have been updated, the logical sectors remain unchanged.

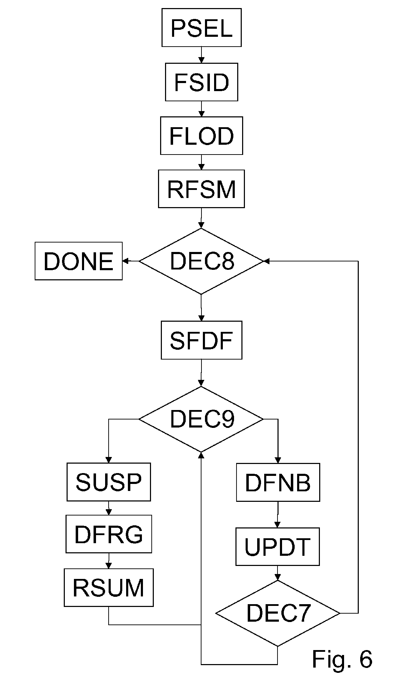

As the described file sorting technique does not produce any visible changes to outside, synchronization with an external file system manager -as described in conjunction with the HDD example- becomes redundant. The flow diagram of steps to be performed by Controller PU2 in FTL in order to defragment the file system on storage is depicted in fig. 6.

Prior to starting the file sorting procedure, the defragmenter FSD on mapping table based storage must select a partition in step PSEL, identify the type of file system on targeted partition in step FSID and, in step FLOD, read appropriate defragmenter algorithms and/or file system libraries into buffer memory RAM. Then in step RFSM, the defragmenter FSD reads file system metadata.

In a subsequent decision step DEC8 it is decided whether all files are defragmented. If so, defragmenter task FSD ends with step DONE. Otherwise, in step SFDF a file is selected for defragmentation.

Prior to defragmenting blocks of the selected file it is checked in decision step DEC9 whether the storage device is idle, i.e. whether there are I/O operations currently executed or scheduled for execution. If so, a loop is entered in which defragmentation is suspended in step SUSP, the system waits some seconds in step WAIT and resumes defragmentation in step RESUM thus returning to decision step DEC9.

Otherwise, some next blocks of the selected file are defragmented, for instance by copying them to different pages, different blocks or different storage modules, in step DFNB, and the mapping table MAP is updated in step UPDT, correspondingly.

If decision step DEC7 yields that the all block of the selected file are defragmented, the method returns to decision step DEC8, otherwise it returns to decision step DEC9.

## Claims

1. Storage device (EXS) comprising
- a non-volatile storage (DSK, FM) storing files according to a file system,
- communication means (PU2) for communicating, to the storage device, requests for copies of files stored in the storage device as well as for communicating the requested copies to a file requesting device,
- a buffer memory (RAM) for temporally storing at least one of: defragmenter code, file system data and file system metadata,
- a controller (PU2) adapted for operation in an input-output mode in which the controller (PU2) is adapted for controlling retrieval and communication of requested copies according the requests wherein
- the controller (PU2) is further adapted for operation in an defragmentation mode in which the controller is using one or both of the defragmenter code and the file system libraries stored in the buffer (RAM) for defragmenting one or more files stored in the storage medium.

2. Storage device (EXS) of claim 1, wherein in defragmentation mode the controller (PU2) is further adapted for switching to input-output mode upon communication of a request for a file copy wherein said switching is postponed until defragmentation of a files currently under defragmentation is terminated.

3. Storage device (EXS) of claim 2, wherein, in input-output mode, the controller (PU2) is further adapted for switching from input-output mode to defragmentation mode after detecting that the controller (PU2) was idle in input-output mode for a predetermined period of time.

4. Storage device (EXS) of one of the claims 1-3, wherein, after switching to defragmentation mode, the controller (PU2) is adapted for loading the defragmenter code and the file system libraries from the storage medium (DSK,FM) or from a further different non-volatile storage medium into the buffer (RAM) prior to using it.

5. Storage device (EXS) of one of the claims 1-4, wherein requests for copies are based on logical addresses and retrieval of requested copies is controlled via physical addresses onto which the logical addresses are mapped by the controller using a mapping table (MAP).

6. Storage device (EXS) of claim 5, wherein the controller (PU2) is further adapted for updating the mapping table (MAP) in accordance with the defragmentation.

7. Storage device (EXS) of claim 3, wherein the communication means (PU2) are further adapted for communicating indications from the file requesting device to the storage device (EXS) said indications indicating whether a file system manager (FSM) of the file requesting device is in active mode, in which the file system manager (FSM) communicates requests for file copies using logical addresses of the files, the controller (PU2) is further adapted for using communicated indications for harmonizing switching between input-output mode and defragmentation mode with the mode of the file system manager (FSM) such that the controller (PU2) switches to defragmentation mode, only, if the file system manager (FSM) is not in active mode, and the controller (PU2) switches to input-output mode, if the file system manager (FSM) becomes active again, the controller (PU2) further providing, via said communication means (PU2), update information regarding updates of logical file addresses which result from defragmentation.

8. Hosting system for hosting a storage device (EXS) according to claim 7, said hosting system comprises
- a buffer memory (MM) for storing copies of file system data allowing for determining logical file addresses,
- a controller (PU1) adapted for operation of a file system manager (FSM) in an active mode in which the file system manager (FSM) receives file requests and uses the file system copies in buffer memory (MM) for determining logical addresses corresponding to requested files,
- communication means (BRG) for communication with said storage device (EXS), said communication means (BRG) being adapted for sending determined logical addresses of files, for communicating copies of corresponding files, for communicating update information regarding any updates of logical file addresses and for sending an indication whether the file system manager is in active mode wherein,
- if the file system manager (FSM) receives a file request while not being in active mode, the file system manager (FSM)
o enters the active mode and sends a corresponding indication, and
o receives update information and updates the file system copies in the buffer memory, accordingly, before
o the file system manager determines the logical address corresponding to the file request.

9. System of claim 8, wherein said communication means (BRG) comprises a predetermined storage area of the storage device (EXS) in which the controller (PU1) stores the update information, said predetermined storage area being accessible by said file system manager (FSM) of the hosting system for reading said update information and for storing said indication.
